# EUROPEAN PATENT APPLICATION

(11) **EP 3 168 451 A1**
(43) Date of publication of application: **17.05.2017**
(21) Application number: 16189188.2
(22) Date of filing: 16.09.2016
(51) Int. Cl.: F02M 37/00, B23K 9/00, B23K 10/00, F02M 37/10

(54) **FUEL SYSTEM IMPROVEMENTS WITH HIGH PRESSURE PUMP FOR WELDER GENERATORS**

(30) Priority: 10.11.2015 US 201514937121
(71) Applicant: Illinois Tool Works, Inc., Illinois 60025 (US)
(72) Inventor: JOCHMAN, Nathan J., Glenview, Illinois, 60025 (US)
(74) Representative: Trinks, Ole

(57) **Abstract**

A portable engine-driven system comprising an engine, wherein the engine is configured to drive a generator, a fuel tank, and a high pressure fuel pump operatively coupled to the engine and the fuel tank. The high pressure fuel pump may be positioned within the fuel tank and configured to pump fuel from the fuel tank to the engine. A check valve and a fuel pressure regulator may be positioned in line between the high pressure fuel pump and the engine, wherein the pressure regulator is configured to regulate a pressure of the fuel between the high pressure fuel pump and the engine. The pressure regulator may be positioned within the fuel tank.

## Description

### BACKGROUND OF THE INVENTION

Welding is a process that has increasingly become ubiquitous in all industries. Welding is, at its core, simply a way of bonding two pieces of metal. Larger welding systems can generate a welding current output in excess of 100 amps, while micro-welding may employ a micro arc under a few amps.

Welding systems may be coupled to the power grid, or use a fuel-powered engine to drive an electric generator, which in turn generates the required current for the specific welding operation. The size of the engine and electric generator is dictated by the maximum welding current output rating of the welder. For instance, a welder that is rated to generate a 300-amp, 33.3 volt arc can require at least 10 kilowatts of power to generate such an arc. Indeed, the power source is often configured to output a higher power (e.g., about 30% higher) than what is required by the arc to account for power loss that may result from, for example, a weld cable voltage drop. Thus, the engine in such a welder must have sufficient horse power to drive an electric generator to generate about 13 kilowatts of power so as to supply the maximum welding current output rating of the welder at any given time.

A liquid fuel is often used as a combustible material to operate the fuel-powered engine of an engine-driven generator. To convey the fuel from the fuel tank to the fuel-powered engine, one or more fuel pumps may be used. With the advent of electronic fuel injection in small engines used in generators, fuel delivered to the injectors is at higher pressure. Existing fuel pump systems, however, are inefficient and suffer from certain draw backs, including, for example, vapor lock conditions and increased fuel temperature. Accordingly, the subject disclosure relates to a fuel delivery system for a generator, such as those used in conjunction with welders, plasma cutters, and the like. More specifically, the present disclosure relates to a generator fuel tank having a high pressure fuel pump, thereby improving fuel delivery issues that hinder the industry.

### BRIEF SUMMARY

The invention relates to fuel delivery systems for a generator. More specifically, the invention relates to a generator fuel tank having a high pressure fuel pump. Systems, methods, and apparatuses are provided for fuel delivery systems and generator fuel tanks having a high pressure fuel pump in welding equipment, substantially as illustrated by and/or described in connection with at least one of the figures, as set forth more completely in the claims.

According to a first aspect, an engine-driven generator comprises: an engine, wherein the engine is configured to drive a generator; a fuel tank; a high pressure fuel pump operatively coupled to the engine and the fuel tank, wherein the high pressure fuel pump is configured to pump fuel from the fuel tank to the engine, and wherein the high pressure fuel pump is positioned within the fuel tank; a check valve positioned in line between the high pressure fuel pump and the engine; and a pressure regulator configured to regulate a pressure of the fuel between the check valve and the high pressure fuel pump, wherein the pressure regulator is positioned within the fuel tank.

According to a second aspect, an engine-driven generator comprises: an engine, wherein the engine is configured to drive a generator; a fuel tank; and a high pressure fuel pump operatively coupled to the engine and the fuel tank, wherein the high pressure fuel pump is configured to pump fuel from the fuel tank to the engine, and wherein the high pressure fuel pump is positioned within the fuel tank.

According to a third aspect, a fuel tank assembly comprises: a fuel tank; a fuel supply tube configured to be operatively coupled to an engine; and a high pressure fuel pump positioned in the fuel tank, wherein the high pressure fuel pump is operatively coupled to the fuel tank and configured to pump fuel from the fuel tank to the fuel supply tube. In certain aspects, the engine is configured to drive a generator, wherein the fuel tank assembly further comprises a check valve positioned in line between the high pressure fuel pump and the fuel supply tube.

In certain aspects, the engine-driven generator further comprises a check valve positioned in line between the high pressure fuel pump and the engine.

In certain aspects, the engine-driven generator further comprises a pressure regulator configured to regulate a pressure of the fuel between the check valve and the engine, the pressure regulator configured to relieve excess fuel back into the fuel tank.

In certain aspects, the pressure regulator is positioned within the fuel tank.

In certain aspects, the engine-driven generator further comprises a fuel filter positioned in line between the pressure regulator and the engine.

In certain aspects, the high pressure fuel pump is an impeller fuel pump.

In certain aspects, the high pressure fuel pump comprises a strainer positioned at an inlet of said high pressure fuel pump.

In certain aspects, the high pressure fuel pump is positioned at a lowest point of the fuel tank.

In certain aspects, the pressure regulator maintains a specified high pressure for delivery to the engine, wherein the specified high pressure is between 10 psi and 60 psi or between 30 psi and 60 psi.

In certain aspects, the high pressure fuel pump pumps fuel from the fuel tank to a fuel injection system of the engine.

In certain aspects, the high pressure fuel pump pumps fuel from the fuel tank to a carburetor of the engine.

### BRIEF DESCRIPTION OF THE DRAWINGS

The features of the present invention will best be understood from a detailed description of the invention and a preferred embodiment thereof selected for the purposes of illustration and shown in the accompanying drawings in which:
Figures 1a and 1b illustrate an exemplary manual arc welding system in accordance with an aspect of this disclosure.
Figure 1c illustrates an enlarged diagram of an exemplary manual welding tool.
Figure 2 illustrates an exemplary robotic arc welding system in accordance with an aspect of this disclosure.
Figure 3 illustrates example welding equipment in accordance with an aspect of this disclosure.
Figure 4 illustrates a pictorial view of an embodiment of a vapor flow control system for delivering fuel in an engine-driven generator in accordance with aspects of the present disclosure.
Figure 5 illustrates an example high pressure fuel delivery system in accordance with an aspect of the present invention.

### DETAILED DESCRIPTION

The present disclosure is directed to systems, methods, and apparatuses for delivering fuel to an engine. More specifically, the present disclosure is directed to a generator fuel tank having a high pressure fuel pump. Preferred embodiments of the present invention will be described herein below with reference to the figures of the accompanying drawings. Like reference numerals are used throughout the drawings to depict like or similar elements. In the following description, well-known functions or constructions are not described in detail, since such descriptions would obscure the invention in unnecessary detail.

For the purpose of promoting an understanding of the principles of the claimed technology and presenting its currently understood best mode of operation, reference will be now made to the embodiments illustrated in the drawings and specific language will be used to describe the same. It will nevertheless be understood that no limitation of the scope of the claimed technology is intended. Further, alterations and/or further modifications to the illustrated device, and such further applications of the principles of the claimed technology as illustrated herein, are contemplated as would typically occur to one skilled in the art to which the claimed technology relates.

As used herein, the word "exemplary" means "serving as an example, instance, or illustration." The embodiments described herein are not limiting, but rather are exemplary only. It should be understood that the described embodiments are not necessarily to be construed as preferred or advantageous over other embodiments. Moreover, the terms "embodiments of the invention," "embodiments," or "invention" do not require that all embodiments of the invention include the discussed feature, advantage, or mode of operation.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first set of one or more lines of code and may comprise a second "circuit" when executing a second set of one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

Carbureted engine typically employ low pressure fuel systems, typically 10 psi or lower, that do not require high pressure pumps. With the recent implementation of electronic fuel injection (EFI) with engines used in generators, however, high pressure fuel delivery (e.g., greater than 10 psi) to the engine's fuel injector system is now needed. To achieve this, for example, a high pressure fuel pump may be integrated into the engine, whereby a low pressure fuel delivery system supplies fuel from a fuel tank to the high pressure pump. More specifically, the fuel may be pumped from the fuel tank by a first pump (e.g., a low pressure pump) that feeds a second pump (e.g., a high pressure pump) positioned on the engine. With such a dual pump arrangement comes, *inter alia,* increased cost and complexity. Further, integrating a high pressure pump on an engine creates opportunity for fuel delivery issues since engines and high pressure fuel pumps create heat and these systems are typically enclosed. Substantial heat generation in the engine compartment makes for hot fuel that at low pressure easily vaporizes causing fuel delivery to be compromised and poor generator performance or inoperation.

To eliminate fuel vapor lock conditions and minimize fuel temperature, while maximizing pump head pressure, a high pressure pump may be submerged in the fuel (i.e., within the fuel tank). Such an arrangement obviates the need for both a low pressure pump and a high pressure pumps in the engine compartment, in favor of a high pressure fuel pump in the fuel tank, thereby eliminating excessive temperature and fuel vaporization in the fuel system. In such a configuration, the fuel would be maintained at high pressure between the fuel tank and the engine, where the high pressure would mitigate vaporization. As a result, the engine would receive an adequate fuel supply at the correct pressure for continued operation at high temperatures or in tight enclosures, such as welding equipment.

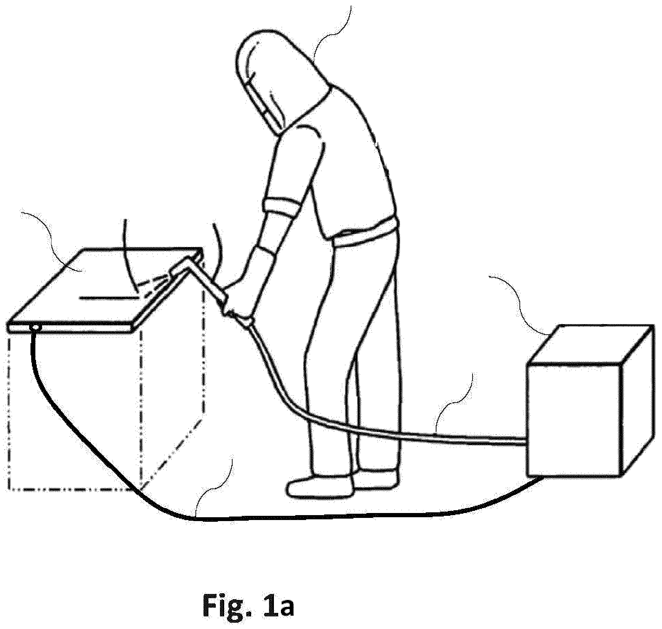

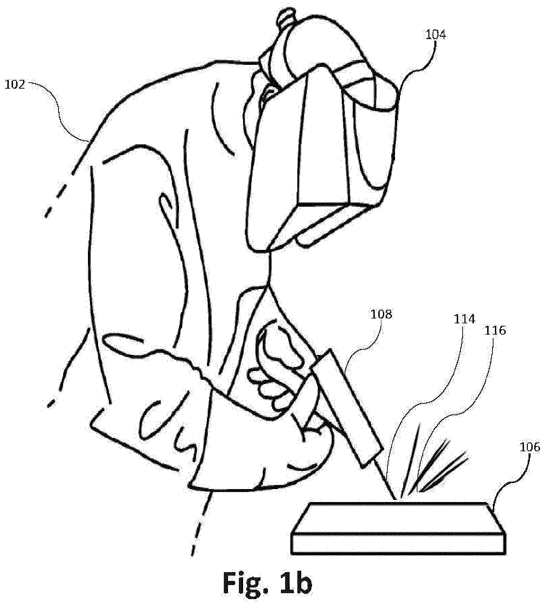

Referring to Figures 1a and 1b, an example manual welding equipment 110 is shown in which an operator 102 is wearing welding headwear 104 and welding a workpiece 106 using a welding tool 108 (e.g., a torch) to which power or fuel is delivered by welding equipment 110 via conduit 118 (for electrical welding, ground conduit 120 provides the return path). The welding equipment 110 may comprise a power or fuel source (generally referred to as a "power supply"), optionally a source of an inert shield gas and, where wire/filler material is to be provided automatically, a wire feeder.

The welding equipment 110 of Figures 1a and 1b may be configured to cut material (e.g., as a plasma cutter) or form a weld joint 112 by any, for example, electric welding techniques (such as shielded metal arc welding (SMAW), more commonly known as stick welding), metal inert gas welding (MIG), flux cored arc welding (FCAW) tungsten inert gas welding (TIG), and resistance welding. TIG welding may involve no external filler metal or may involve manual, automated or semi-automated external metal filler. Optionally in any embodiment, the welding equipment 110 may be arc welding equipment that provides a direct current (DC) or alternating current (AC) to a consumable or non-consumable electrode 114 (shown in, for example, Figure 1b) of a welding tool 108 (e.g., a torch), which may be a TIG torch, a MIG torch, a flux cored torch (commonly called a MIG "gun"), or a stick electrode holder (commonly called a "stinger").

In operation, the electrode 114 delivers the current to the point of welding on the workpiece 106. In the welding equipment 110, the operator 102 controls the location and operation of the electrode 114 by manipulating the torch 108 and triggering the starting and stopping of the current flow via, for example, a trigger 124. When current is flowing, an arc 116 is developed between the electrode 114 and the workpiece 106. The conduit 118 and the electrode 114 thus deliver current and voltage sufficient to create the electric arc 116 between the electrode 114 and the workpiece 106. The arc 116 locally melts the workpiece 106 and welding wire (or rod) supplied to the weld joint 112 (the electrode 114 in the case of a consumable electrode, or a separate wire or rod in the case of a non-consumable electrode) at the point of welding between electrode 114 and the workpiece 106, thereby forming a weld joint 112 when the metal cools.

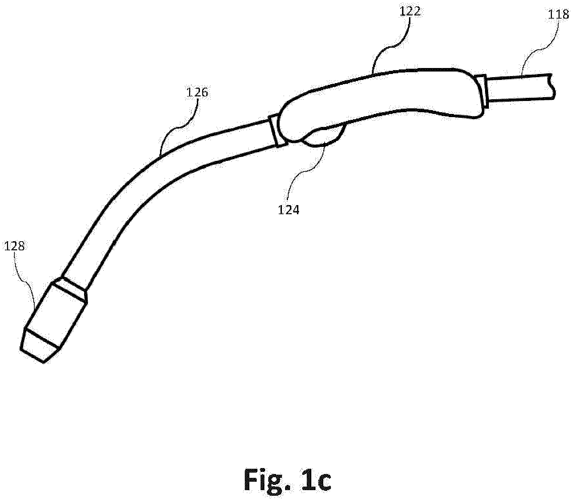

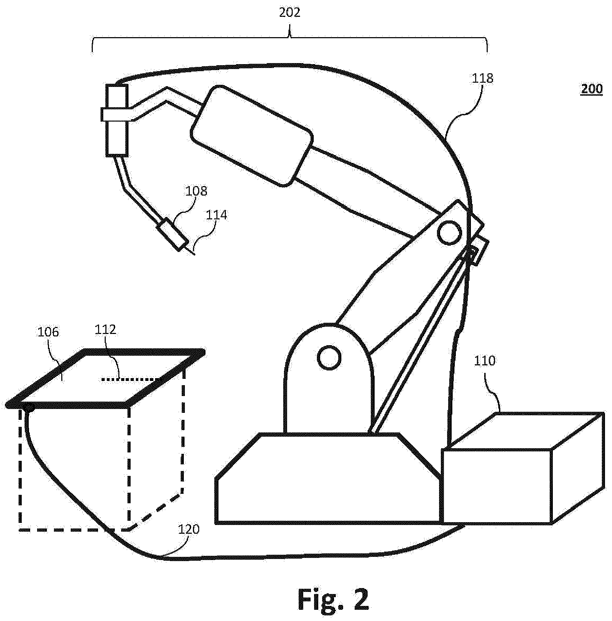

A plasma cutter operates in a similar fashion. Specifically, an inert, or semi-inert, gas is blown at high speed out of a nozzle 128, while an electrical arc is formed through that gas from the nozzle 128 to the workpiece 106 being cut, turning some of that gas to plasma. The plasma is hot enough to melt the workpiece 106 being cut and moves fast enough to blow molten material away from the cut. Figure 1c illustrates an enlarged diagram of an exemplary manual welding tool 108, specifically, a torch. As illustrated, a manual welding tool generally comprises a handle 122, a trigger 124, a conductor tube 126, and a nozzle 128 at the distal end of the conductor tube 126. Applying pressure to the trigger 124 (i.e., actuating the trigger) initiates the welding (or cutting, where applicable) process, whereby output power is provided, and the wire feeder 214, and/or the gas supply 216 are activated as needed. In certain aspects, in lieu of a human operator 102, a robot 202 *(e.g.,* a robotic arm) may control the location and operation of the electrode 114. An example of such an arrangement is illustrated in Figure 2, which illustrates an exemplary robotic arc welding system 200 in accordance with another aspect of this disclosure. In the welding system 200, the robot 202 controls the location and operation of the electrode 114 by manipulating the welding tool 108 and triggering the starting and stopping of the current flow.

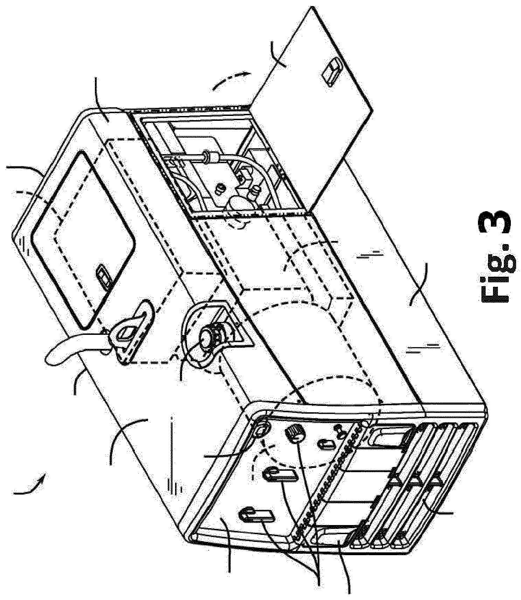

Figure 3 illustrates a portable engine-driven welding equipment 110 having a generator 302 drivingly coupled to an engine 304 in a single enclosure 306 in accordance with an exemplary embodiment of the present technique. While the engine-driven welding equipment 110 of the subject is described as being portable and configured within a single enclosure 306, the subject teachings shall not be limited to portable engine-driven power supplies, but rather, may be applied to stationary and/or larger engine-driven power supplies, such as those that are used in connection with robotic arc welding system 200.

The single enclosure 306 may include multiple functionalities in one portable system to improve productivity and reduce space consumption. Specifically, the welding equipment 110 is configured to output electrical power for a variety of applications, including welding, cutting, battery charging, jump starting, and so forth. Moreover, the welding equipment 110 includes intelligence (e.g., logic in software and/or hardware) to adjust the outputs based on various feedback to the welding equipment 110 and an external device receiving the electrical power from the power supply module, such as engine 304. For example, the welding equipment 110 does not randomly provide output power for welding and/or charging, but rather the welding equipment 110 analyzes various parameters, executes various logic, and intakes sensed feedback to make an intelligent decision regarding the output.

In some embodiments, however, the welding equipment 110 may provide output power without adjustment or analysis of any parameters or feedback. The enclosure 306 may comprise a front panel 308, a rear panel 310, a right side 312, and a left side 314, all engaging a base 316 to complete the enclosure 306. The enclosure 306 protects, *inter alia,* the engine 304 and the generator 302 from dust, debris, and rough handling. The enclosure 306 also reduces noise and helps to cool the engine 304 by preventing hot air recirculation via a cool air inlet 318 on the front panel 308 by pulling air through the interior volume of the enclosure 306. In certain embodiments, the rear panel 310 may also include an air inlet for air intake and/or exhaust flow.

A control system regulates the electrical power supplied by the generator 302 and allows for it to be used for a welding process and/or auxiliary power to other devices or tools. The control circuitry comprises circuitry (e.g., a microcontroller and memory) operable to process data from the operator interface, the generator 302, one or more sensors, the wire feeder, and/or the gas supply; and to output data and/or control signals to the operator interface, the generator 302, the wire feeder, and/or the gas supply.

The front panel 308 may provide an operator interface, which may comprise electromechanical interface components (e.g., screen, speakers, microphone, buttons/switches, touchscreen, cameras, voice recognition or hand gesture recognition input device, an industrial personal computer (IPC) or programmable logic controller (PLC), barcode scanner, etc.) and associated drive circuitry. The operator interface may generate electrical signals in response to operator input (e.g., screen touches, button/switch presses, voice commands, remote sensor input, etc.). Driver circuitry of the operator interface may condition (e.g., amplify, digitize, etc.) the signals and communicate them to the control circuitry. The operator interface may generate audible, visual, and/or tactile output (e.g., via speakers, a display, and/or motors/actuators/servos/etc.) in response to signals from the control circuitry. In certain aspects, one or more components of the operator interface may be positioned on the welding tool and/or, whereby control signals from the one or more components are communicated to the control circuitry via conduit 118 or via a network.

In one embodiment, the front panel 308 may include various indicators 320 to provide feedback to the user. For example, the indicator 320 may include an LCD to display voltage, amperage, air pressure, and the like. Further, in some embodiments, a user input 322 may include a touch screen, knobs, and/or buttons configured for a mode of operation, an output level or type, etc. For instance, the user input 322 may include a dial rotatable to select a mode of operation, such as a DC weld, an AC weld, a battery charge, or a tool operation. Embodiments of the front panel 308 include any number of inputs and outputs, such as welding methods, oil pressure, oil temperature, and system power.

A power supply comprises circuitry for generating (or otherwise providing) power to be delivered to a welding electrode via conduit 118. The welding equipment 110 may comprise, for example, one or more generators, voltage regulators, current regulators, switch mode power supplies, and/or the like. The voltage and/or current output by the power supply may be controlled by a control signal from the control circuitry. In an exemplary embodiment, the power supply comprises an engine 304 and a generator 302, where the engine 304 provides output power (e.g., a mechanical output) to drive the welding generator 302. In certain embodiments, the power from the engine 304 operates the generator 302 via a drive shaft. The drive shaft may be directly or indirectly coupled to one or more driven mechanisms. For example, an indirect coupling may include a belt and pulley system, a gear system, or a chain and sprocket system. In the present embodiment, the drive shaft couples directly to the generator 302. However, either arrangement can be used for the connection between the engine 304 and the generator 302.

In an embodiment, the engine 304 may include a combustion engine powered by gas or diesel, liquefied petroleum (LP) fuel, natural gas, or other fuel, and driving one or more drive shafts. For example, the engine 304 may include an industrial gas/diesel engine configured to output anywhere from about 9 horsepower (Hp) to about 30 Hp, or more. Generally, the weight of such an engine 304 may vary with the size and Hp rating of the engine 304. For example, a 23 Hp engine may weigh approximately 100 lbs., whereas a similar 9 Hp engine may weigh less than approximately 50 lbs. Thus, when possible, the portable welding equipment 110 may benefit from the use of a smaller engine 304.

As discussed previously, embodiments may include a generator 302 coupled to the engine 304. Thus, the generator 302 may convert the power output (e.g., mechanical energy) of the engine 304 to an electrical power. Generally, the generator 302 includes a device configured to convert a rotating magnetic field into an electrical current (e.g., AC generator). The generator 302 includes a rotor (the rotating portion of the generator) and a stator (the stationary portion of the generator). For example, the rotor of the generator 302 may include the rotating drive shaft of the engine 304 disposed in a single stator configured to create an electrical current (e.g., welding current) from the rotation of the magnetic field. In an embodiment, the generator may include a four-pole rotor and three-phase weld output configured to provide beneficial welding characteristics. Further, the generator 302 may include a plurality of independent winding sections in the rotors and/or stators, such that the generator 302 is configured to output multiple electrical outputs having different characteristics. For example, the generator 302 may include a first section configured to drive a welding current to a welder and a second section configured to drive a current for other AC outputs. In some embodiments, multiple generators may be connected to the drive shaft. In an example implementation, the power supply may comprise circuitry for measuring the voltage and/or current on the conduit 118 (at either or both ends of the conduit 118) such that reported voltage and/or current is an actual value and not simply an expected value based on calibration.

As depicted in Figure 3, the enclosure 306 may include various access panels to enable servicing, repair, and so forth. For example, a side access panel 324 may be configured to attach to opposite sides of the enclosure 306. The top of the enclosure 306 may include an access panel or hatch 326, which may be both rotatable between open and closed positions above the components of the power supply module 304. The top hatch 326 can rotate open to enable access to the engine 304. Similarly, the side access panel 324 can rotate open to enable access to the engine 304, oil filter, spark plugs, etc.

The illustrated welding equipment 110 also includes various external connections 328. The external connections 328 may include various outlets and couplers configured to provide access to the electrical power generated by the power supply module 304. For example, the external connections 328 may include an AC power output and a DC power output, which may be coupled to various devices and tools. For example, the AC power output may provide auxiliary power to various devices or tools integrated within or coupled to the power supply module 304. The DC power output can be coupled to various welding and cutting tools, such as a welding torch. The welding devices may receive current from the generator 302 via the external connections 328. As will be appreciated, the torch may include various welding devices, such as a TIG (tungsten inert gas) torch, a MIG (metal inert gas) gun, or a plasma cutting torch. The welding equipment 110 may also include welding cable connecting the torch to the external connections 328. Further, the welding equipment 110 may include other components necessary for operation of a welding device, such as a wire feeder, a shielding gas supply, and/or any other component, or combination thereof. The welding equipment 110 also includes a fuel tank that holds fuel to be provided to the engine 304. The fuel tank includes an opening for adding fuel to the fuel tank. A fuel cap 330 is used to cover the opening of the fuel tank and may be used to vent fuel vapor. For example, the fuel cap 330 may include a pressure relief valve for releasing fuel vapor when pressure within the fuel tank exceeds a threshold pressure.

In certain aspects, the welding equipment 110 may further comprise a wire feeder module, a gas supply module, and/or a communication interface circuitry operatively coupled to an antenna and/or a communication port. The gas supply module is configured to provide gas (e.g., shielding gas) via conduit 118 for use during the welding or cutting process. Shielding gases are generally inert, or semi-inert, gases used in several welding processes, most notably gas metal arc welding and gas tungsten arc welding (e.g., MIG and TIG). A purpose of shielding gases is to protect the weld area from oxygen, and moisture containing hydrogen. Depending on the materials being welded, these atmospheric gases can reduce the quality of the weld or make the welding more difficult. The gas supply module may comprise an electrically controlled valve for controlling the rate of gas flow. The valve may be controlled by a control signal from control circuitry (which may be routed through the wire feeder, or come directly from the control circuitry). The gas supply module may also comprise circuitry for reporting the present gas flow rate to the control circuitry. In terms of plasma cutters, the gas supply module may be configured to provide gas for cutting purposes. In an example implementation, the gas supply module may comprise circuitry and/or mechanical components for measuring the gas flow rate such that the reported flow rate is an actual flow value and not simply an expected flow value based on calibration, thereby providing increased reliability and accuracy.

The wire feeder module may be configured to deliver a consumable wire electrode to the weld joint 112. The wire feeder module may comprise, for example, a spool for holding the wire, an actuator for pulling wire off the spool to deliver to the weld joint 112, and circuitry for controlling the rate at which the actuator delivers the wire. The actuator may be controlled based on a control signal from the control circuitry. The wire feeder module may also comprise circuitry for reporting the present wire speed and/or amount of wire remaining to the control circuitry. In an example implementation, the wire feeder module may comprise circuitry and/or mechanical components for measuring the wire speed, such that reported speed is an actual speed, and not simply an expected value based on calibration, thereby providing increased reliability. For TIG or stick welding, the wire feeder module may not be used (or may not even be present in the welding equipment 110).

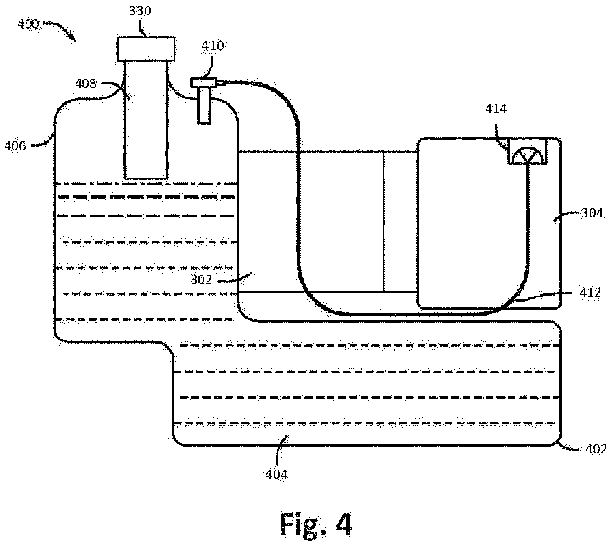

Figure 4 illustrates a pictorial view of an embodiment of a fuel system 400 configured with a fuel vapor venting system for delivering fuel in the engine-driven welding equipment 110 (or in any engine-driven system, such as portable engine-driven systems). As illustrated, the fuel system 400 includes a fuel tank 402 for holding fuel 404 (e.g., generally liquid fuel) that is provided to the engine 304 and is used to power the engine 304. As will be appreciated, fuel vapor of the fuel 404 may collect in and contact an upper portion 406 (e.g., vapor space) of the fuel tank 402. The upper portion 406 may act as an accumulator for fuel vapor. In certain embodiments, the volume of the upper portion 406 may be approximately 5 to 20% of the total fuel tank 402 volume. The fuel cap 330 covers an opening used for filling the fuel tank 402 with the fuel 404. To inhibit fuel vapor from freely flowing into the atmosphere, the fuel cap 330 may generally seal the opening (e.g., the fuel cap 330 may not include apertures that allow fuel vapor to freely flow out of the fuel tank 402). A neck tube 408 extends from the fuel cap 330 and may be used to help determine the recommended amount of liquid fuel 404 in the fuel tank 402 to allow for thermal expansion of the fuel 404. In certain aspects, a valve 410 may be used to direct fuel vapor from the fuel tank 402 (e.g., the upper portion 406 of the fuel tank 402) to the engine 304. As illustrated, the valve 410 may be coupled to the upper portion 406 of the fuel tank 402. Further, a hose 412 may couple the valve 410 to an air intake 414 of the engine 304. The engine 304 may combust fuel vapor from the fuel tank 402 and inhibit the fuel vapor from being vented (e.g., escaping from the vapor flow control system 400) to the atmosphere, such as while the engine 304 is operating. For example, the valve 410 may be closed (e.g., to inhibit fuel vapor from flowing to the engine 304) while the engine 304 is not operating and the valve 410 may be opened (e.g., to enable fuel vapor to flow to the engine 304) while the engine 304 is operating. The valve 410 may be any suitable valve and may be controlled by any suitable controlling mechanism of the engine-driven welding equipment 110.

In certain embodiments, the fuel cap 330 may include a pressure relief portion to relieve vapor pressure buildup in the fuel tank 402, such as for times while the engine 304 is not operating. In some embodiments, the valve 410 may also include a pressure relief portion to relive vapor pressure buildup in the fuel tank 402. As described, the fuel system 400 may be used to provide fuel vapor to the engine 304 when desired. Accordingly, fuel vapor may be inhibited from flowing to the engine 304 at undesirable times (e.g., such as while shutting off the engine-driven welding equipment 110). For additional information relating to fuel vapor venting techniques, see, for example, commonly owned U.S. Patent Publication No. 2012/0240900 to John P. Laitala et al. and entitled "Systems and Methods for delivering fuel in an Engine-Driven Generator."

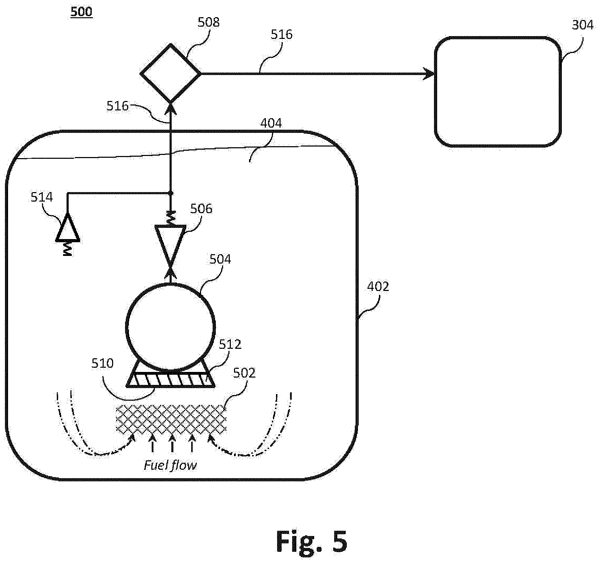

Figure 5 illustrates an example high pressure fuel delivery system 500 in accordance with an aspect of the present invention. As illustrated, a high pressure fuel pump 504 may be positioned inside the fuel tank 402 to eliminate, *inter alia,* issues commonly associated with electronic fuel injected (EFI) small engines that are placed in tight enclosures, such as fuel delivery and/or vapor lock conditions. The high pressure fuel pump 504 may be any high pressure fuel pump and may be controlled by any suitable controlling mechanism of the engine-driven welding equipment 110. In certain aspects, pressure control or regulation may be accomplished by electrically driving the pump as needed to maintain a predetermine target pressure, thus eliminating the need for a pressure regulator in the circuit. The high pressure fuel pump 504 may be, for example, an impeller 512 driven fuel pump, gear/rotor pump, or an alternative pump configuration. In operation, a high pressure fuel pump 504 or, at minimum the high pressure fuel pump 504 inlet 510, should be submerged in the fuel 404 so as to facilitate transfer of the fuel 404 from the fuel tank 402 to the engine 304. To achieve this, the high pressure fuel pump 504 (or, at minimum, the inlet tube or inlet strainer of the high pressure fuel pump 504) may be positioned at the lowest point of the fuel tank 402, which enables fluid communication with the fuel 404, so as to increase the inlet pump head pressure. To ensure that the high pressure fuel pump 504 is positioned at the lowest point of the fuel tank 402, in certain aspects, the fuel tank 402 may be shaped to comprise a concave indentation (as perceived from within the fuel tank 402) at the lowest point of the fuel tank 402 that is configured to receive the inlet 510, thereby guiding the fuel 404 towards the indentation as the fuel 404 is depleted.

While the high pressure fuel pump 504 will operate with only the inlet 510 positioned at the bottom of the fuel tank 402, positioning the entire high pressure fuel pump 504 at the bottom of the fuel tank 402 can achieve the greatest head pressure to reach the pump impeller 512. Along with the high pressure fuel pump 504 in the fuel tank 402, a pressure regulator 514 may be positioned on the high pressure side of the high pressure fuel pump 504 to relieve excess fuel 404 back into the fuel tank 402, thereby maintaining a specified high pressure for delivery to the engine 304 via, for example, a fuel supply tube 516. The fuel supply conduit 516 may be, for example, any fuel line capable of conveying fuel 404 from the fuel tank 402 to the engine 304, such as those made from metal and/or reinforced rubber or other flexible material, which can mitigate splitting and kinking. For example, the fuel 404 may be delivered to a fuel injection system of the engine 304 via the fuel supply conduit 516. The specified high pressure may be between, for example, 10 psi and 60 psi, more preferably between 20 psi and 50 psi, even more preferably between 25 psi and 45 psi, most preferably between 30 psi and 40 psi. In certain aspects, the fuel supply conduit 516 may be discontinuous and may comprise one or more in line components, such as, for example, a fuel screening 508, which is discussed below.

To mitigate the intake of particles from the fuel tank 402, such as dirt and/or other debris, a strainer 502 may be provided at the inlet 510. Indeed, fuel pumps are often built to very tight tolerances to ensure long life and quiet operation, which makes them somewhat vulnerable to even the smallest particles of dirt. As illustrated, the strainer 502 covers the fuel pump intake 510. As fuel 404 is drawn through the strainer 502, the particles are trapped in its fine mesh. As illustrated, a fuel screening 508 may be further provided between the fuel tank 402 and the engine 304. Fuel screening 508 screens out dirt and rust particles from the fuel 404 in the fuel line. Such fuel screening 508 may comprise, for example, a cartridge fabricated from a filter material, such as paper.

A check valve 506 may be positioned between the high pressure fuel pump 504 and pressure regulator 514 and configured to maintain fuel 404 in the fuel system 500 when the high pressure fuel pump 504 is not energized. The pressure regulator 514 may be internal or external to the fuel tank. The check valve offers a number of benefits. First, the check valve maintains fuel in the fuel system when the pump is not operating, which improves engine starting by reducing the amount of pump run time to build pressure. Second, another benefit of the fuel system staying full of fuel is that varnish build up from gasoline vaporization during storage on critical fuel system components, like fuel injectors, is eliminated when fuel is held in the fuel system. The high pressure fuel delivery system 500 eliminates the need for multiple fuel pumps that would be needed to supply the engine 304. As discussed above, when a high pressure fuel pump is positioned on the engine 304, the high pressure fuel pump must still be supplied with fuel 404 by another pump (e.g., a low pressure fuel pump). Thus, a high pressure fuel delivery system 500 in accordance with the present teachings reduces this unnecessary cost by eliminating the need for a second pump, while further improving and simplifying the welding equipment 110.

The high pressure fuel delivery system 500 also allows for pressure regulation in the fuel tank 402 that reduces the temperature at the high pressure fuel pump 504's fuel inlet 510. For instance, when a high pressure pump is positioned on the engine 304, inlet fuel may be recirculated from the regulator back to the fuel pump inlet quickly and repeatedly, thereby causing undesirable conditions, such as a large increase in fuel inlet temperatures and fuel vaporization. Further, the high pressure fuel delivery system 500 removes excessive vibration from the high pressure fuel pump 504. That is, when the high pressure fuel pump 504 is on the engine 304, the high pressure fuel pump 504 is subject to vibration generated by the engine 304, which increases the likelihood of fuel vaporization and vapor lock conditions. Positioning the high pressure fuel pump 504 within the fuel tank 402, however, insulates the high pressure fuel pump 504 from the engine vibration and hence substantially mitigates such vibration. Finally, high pressure fuel delivery system 500 eliminates the need to control vapors in a second location. When the high pressure fuel pump 504 is mounted on the engine 304, the fuel system would employ a vapor vent to prevent the pump from vapor locking. The need for such a secondary vent system is eliminated when a high pressure fuel pump 504 is incorporated in the fuel tank 402 because the second fuel pump is eliminated.

While the various examples illustrate the high pressure fuel pump 504 as being positioned within the tank, other configurations are contemplates. In certain aspects, for example, the high pressure fuel pump 504 may be placed in line between the fuel tank 402 and engine 304, however, in such a configuration, a second pump could be needed to pump the fuel 404 from the fuel tank 402 to the high pressure fuel pump 504. This arrangement, nevertheless, would provide cooling before being returned to the tank 304.

The present methods and systems may be realized in hardware, software, or a combination of hardware and software. The present methods and/or systems may be realized in a centralized fashion in at least one computing system or in a distributed fashion where different elements are spread across several interconnected computing systems. Any kind of computing system or other apparatus adapted for carrying out the methods described herein is suited. A typical combination of hardware and software may include a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

The foregoing description and accompanying figures illustrate the principles, preferred embodiments, and modes of operation of the invention. However, the invention should not be construed as being limited to the particular embodiments discussed above. Additional variations of the embodiments discussed above will be appreciated by those skilled in the art. Therefore, the above-described embodiments should be regarded as illustrative rather than restrictive. Accordingly, it should be appreciated that variations to those embodiments can be made by those skilled in the art without departing from the scope of the invention as defined by the following claims.

All documents cited herein, including journal articles or abstracts, published or corresponding U.S. or foreign patent applications, issued or foreign patents, or any other documents are each entirely incorporated by reference herein, including all data, tables, figures, and text presented in the cited documents.

## Claims

1. An engine-driven generator comprising:
- an engine, wherein the engine is configured to drive a generator;
- a fuel tank; and
- a fuel pump operatively coupled to the engine and the fuel tank, wherein the fuel pump is configured to pump fuel from the fuel tank to the engine, and
wherein the fuel pump is positioned within the fuel tank.

2. The engine-driven generator of claim 1,
wherein the engine-driven generator further comprises a check valve positioned in line between the fuel pump and the engine.

3. The engine-driven generator of claim 2,
wherein the engine-driven generator further comprises a pressure regulator configured to regulate a pressure of the fuel between the check valve and the engine, the pressure regulator configured to relieve excess fuel.

4. The engine-driven generator of claim 3,
wherein the pressure regulator is positioned within the fuel tank.

5. The engine-driven generator of claim 3,
wherein the pressure regulator is positioned outside of the fuel tank.

6. The engine-driven generator of one of the preceding claims,
wherein the engine-driven generator further comprises a fuel filter positioned in line between the fuel pump and the engine.

7. The engine-driven generator of one of the preceding claims,
wherein the fuel pump is an impeller fuel pump.

8. The engine-driven generator of one of the preceding claims,
wherein the fuel pump is a high pressure fuel pump.

9. The engine-driven generator of one of the preceding claims,
wherein the fuel pump comprises a strainer positioned at an inlet of said fuel pump.

10. The engine-driven generator of one of the preceding claims,
wherein an inlet of the fuel pump is positioned at a lowest point of the fuel tank.

11. The engine-driven generator of one of claims 3 to 10,
wherein the pressure regulator maintains a specified high pressure for delivery to the engine, wherein the specified high pressure is between 10 psi and 60 psi, preferably between 25 psi and 45 psi.

12. The engine-driven generator of one of the preceding claims,
wherein the fuel pump pumps fuel from the fuel tank to a fuel injection system of the engine.

13. The engine-driven generator of one of the preceding claims,
wherein the fuel tank includes an indentation at the lowest point of the fuel tank configured to receive an inlet of the fuel pump.

14. A fuel tank assembly for use with an engine-driven generator of one of claims 1 to 13, the fuel tank comprising:
- a fuel tank;
- a fuel supply tube configured to be operatively coupled to an engine-driven generator; and
- a fuel pump positioned in the fuel tank, wherein the fuel pump is operatively coupled to the fuel tank and configured to pump fuel from the fuel tank to the fuel supply tube.

15. The fuel tank assembly of claim 14,
wherein the fuel tank assembly further comprises a check valve positioned in line between the fuel pump and the fuel supply tube.
